(19) 

**Europäisches Patentamt**
**European Patent Office**
**Office européen des brevets**

(11) **EP 4 080 427 A1**

(12) **EUROPEAN PATENT APPLICATION**
published in accordance with Art. 153(4) EPC

(43) Date of publication:
**26.10.2022 Bulletin 2022/43**

(21) Application number: **20901703.7**

(22) Date of filing: **03.12.2020**

(51) International Patent Classification (IPC):
***G06Q 10/04*** *(2012.01)*

(52) Cooperative Patent Classification (CPC):
**G06Q 10/04**

(86) International application number:
**PCT/JP2020/044987**

(87) International publication number:
**WO 2021/124904 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2019 JP 2019227552**

(71) Applicant: **Sony Group Corporation Tokyo 108-0075 (JP)**

(72) Inventor: **TATENO, Kei Tokyo 108-0075 (JP)**

(74) Representative: **MFG Patentanwälte Meyer-Wildhagen Meggle-Freund Gerhard PartG mbB Amalienstraße 62 80799 München (DE)**

(54) **INFORMATION PROCESSING DEVICE, INFORMATION PROCESSING METHOD, AND PROGRAM**

(57) The present technology relates to an information processing device, an information processing method, and a program capable of detecting fraud in actual result data used for calculation of a prediction accuracy of a prediction model.

An information processing device includes a prediction accuracy calculation unit configured to calculate a first prediction accuracy with respect to a prediction target sample that is a prediction target of a prediction model, on the basis of first actual result data indicating an actual result value with respect to the prediction target sample, and calculate a second prediction accuracy with respect to a non-prediction target sample that is not a prediction target of the prediction model, on the basis of second actual result data indicating an actual result value with respect to the non-prediction target sample, and a reliability calculation unit configured to calculate a reliability of the first actual result data on the basis of the first prediction accuracy and the second prediction accuracy. The present technology can be applied to, for example, a server that provides a prediction model.

FIG. 2

**Description**

TECHNICAL FIELD

The present technology relates to an information processing device, an information processing method, and a program, and particularly relates to an information processing device, an information processing method, and a program suitable for use in a case of calculating a prediction accuracy of a prediction model.

BACKGROUND ART

Conventionally, a technology of calculating a reward to each of data scientists on the basis of the degree of contribution according to the accuracy of the corresponding one of prediction models that predict a predetermined event and the order in which the prediction models are provided has been proposed (see, for example, Patent Document 1).

CITATION LIST

PATENT DOCUMENT

Patent Document 1: Japanese Patent Application Laid-Open No. 2019-46456

SUMMARY OF THE INVENTION

PROBLEMS TO BE SOLVED BY THE INVENTION

For example, in a case where the usage fee of a prediction model is set by an achievement reward according to the prediction accuracy as in the technology described in Patent Literature 1, it is assumed that a side that provides the prediction model (hereinafter, referred to as a model provider) calculates the prediction accuracy on the basis of an actual result value provided from a side that uses the prediction model (hereinafter, referred to as a model user). However, in this case, there is a possibility that the model user attempts to reduce the prediction accuracy by falsifying the actual result data indicating the actual result value and providing the actual result data to the model provider in order to unreasonably reduce the fee.

The present technology has been made in view of such a situation, and enables detection of fraud in actual result data used for calculation of a prediction accuracy of a prediction model.

SOLUTIONS TO PROBLEMS

An information processing device according to an aspect of the present technology includes a prediction accuracy calculation unit configured to calculate a first prediction accuracy with respect to a prediction target sample that is a prediction target of a prediction model, on the basis of first actual result data indicating an actual result value with respect to the prediction target sample, and calculate a second prediction accuracy with respect to a non-prediction target sample that is not a prediction target of the prediction model, on the basis of second actual result data indicating an actual result value with respect to the non-prediction target sample, and a reliability calculation unit configured to calculate a reliability of the first actual result data on the basis of the first prediction accuracy and the second prediction accuracy.

An information processing method according to an aspect of the present technology is performed by an information processing device, and includes calculating a first prediction accuracy with respect to a prediction target sample that is a prediction target of a prediction model, on the basis of first actual result data indicating an actual result value with respect to the prediction target sample, calculating a second prediction accuracy with respect to a non-prediction target sample that is not a prediction target of the prediction model, on the basis of second actual result data indicating an actual result value with respect to the non-prediction target sample, and calculating a reliability of the first actual result data on the basis of the first prediction accuracy and the second prediction accuracy.

A program according to an aspect of the present technology causes a computer to perform processing of calculating a first prediction accuracy with respect to a prediction target sample that is a prediction target of a prediction model, on the basis of first actual result data indicating an actual result value with respect to the prediction target sample, calculating a second prediction accuracy with respect to a non-prediction target sample that is not a prediction target of the prediction model, on the basis of second actual result data indicating an actual result value with respect to the non-prediction target sample, and calculating a reliability of the first actual result data on the basis of the first prediction accuracy and the second prediction accuracy.

According to an aspect of the present technology, a first prediction accuracy with respect to a prediction target sample that is a prediction target of a prediction model is calculated on the basis of first actual result data indicating an actual result value with respect to the prediction target sample, a second prediction accuracy with respect to a non-prediction target sample that is not a prediction target of the prediction model is calculated on the basis of second actual result data indicating an actual result value with respect to the non-prediction target sample, and a reliability of the first actual result data is calculated on the basis of the first prediction accuracy and the second prediction accuracy.

BRIEF DESCRIPTION OF DRAWINGS

Fig. 1 is a block diagram illustrating an embodiment of an information processing system to which the present technology is applied.
Fig. 2 is a block diagram illustrating a configuration example of a server.
Fig. 3 is a block diagram illustrating a configuration example of a client.
Fig. 4 is a flowchart for describing prediction service providing processing performed by the server.
Fig. 5 is a diagram illustrating an example of learning data.
Fig. 6 is a diagram illustrating an example of prediction target sample data.
Fig. 7 is a diagram illustrating an example of prediction result data.
Fig. 8 is a diagram illustrating an example of actual result data.
Fig. 9 is a diagram illustrating an example of non-prediction target sample data.
Fig. 10 is a diagram illustrating an example of cross validation data.
Fig. 11 is a diagram for describing cross validation.
Fig. 12 is a view illustrating an example of a display screen for a model provider.
Fig. 13 is a view illustrating an example of a display screen for a model user.
Fig. 14 is a diagram illustrating a configuration example of a computer.

MODE FOR CARRYING OUT THE INVENTION

Hereinafter, an embodiment for carrying out the present technology will be described. The description will be given in the following order.

1. Embodiment
2. Modifications
3. Others

<<1. Embodiment>>

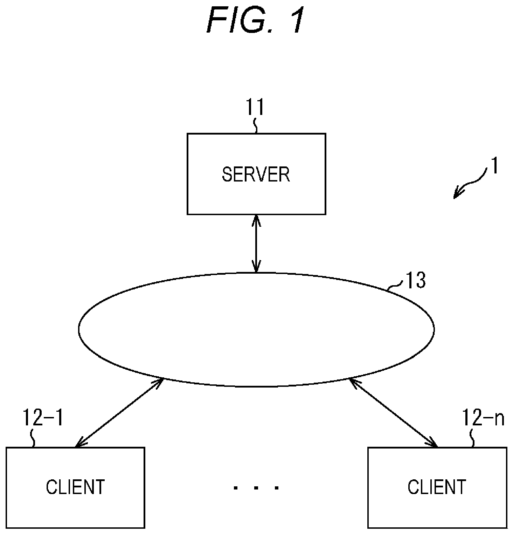

An embodiment of the present technology will be described with reference to Figs. 1 to 13.

<Configuration Example of Information Processing System 1>

Fig. 1 illustrates an embodiment of an information processing system 1 to which the present technology is applied.

The information processing system 1 includes a server 11 and clients 12-1 to 12-n. The server 11 and the clients 12-1 to 12-n are connected to each other via a network 13 and communicate with each other.

Note that hereinafter, in a case where it is not necessary to individually distinguish the clients 12-1 to 12-n, the clients are simply referred to as clients 12.

The server 11 is used by a model provider who provides a service for predicting various events using a prediction model (hereinafter, referred to as a prediction service). Note that the event that is a prediction target in the prediction service is not particularly limited.

Each client 12 is used by a model user who uses the prediction service. The client 12 includes, for example, an information processing terminal such as a personal computer (PC), a smartphone, or a tablet terminal.

Then, the server 11 provides the prediction service to each client 12.

For example, the client 12 transmits learning data used for learning a prediction model for predicting a predetermined event to the server 11 via the network 13.

The server 11 generates a prediction model on the basis of the learning data. For example, the server 11 generates a prediction model that predicts a behavior of a user on the basis of a feature amount of the user.

Furthermore, the client 12 transmits data (hereinafter referred to as prediction target sample data) related to a sample to be predicted (hereinafter, referred to as a prediction target sample) such as an occurrence probability of a predetermined event to the server 11 via the network 13. Note that the sample that is a prediction target is not particularly limited, and for example, a person, an object, a space, a time, and the like are assumed. Furthermore, the prediction target sample data includes, for example, a feature amount and the like of each prediction target sample.

The server 11 predicts an occurrence probability or the like of a predetermined event of each prediction target sample on the basis of the prediction model and the prediction target sample data. The server 11 transmits data indicating the prediction result (hereinafter, referred to as prediction result data) to the client 12 via the network 13.

The model user performs various actions using the prediction result data. For example, the model user provides a service, a promotion, or the like suitable for each user on the basis of the behavior prediction of each of users who are the prediction target samples.

Then, the clients 12 transmit actual result data (hereinafter, referred to as prediction target actual result data) indicating actual results (hereinafter, referred to as actual result values) related to a predetermined event with respect to the prediction target samples to the server 11 via the network 13. Furthermore, the client 12 transmits, to the server 11 via the network 13, data (hereinafter, non-prediction target sample data) related to samples that are not prediction targets (hereinafter, referred to as non-prediction target samples) and actual result data (hereinafter, referred to as non-prediction target actual result data) with respect to samples that are not prediction targets. The non-prediction target sample data includes, for example, a feature amount and the like of each non-prediction target sample.

The server 11 calculates the prediction accuracy with respect to the prediction target samples and the non-prediction target samples on the basis of the prediction target sample data, the prediction target actual result data, the non-prediction target sample data, and the non-prediction target actual result data. Furthermore, the server 11 calculates the reliability of the actual result data on the basis of the prediction accuracy with respect to the prediction target samples and the non-prediction target samples. Moreover, the server 11 sets a fee to be charged to the model user on the basis of the prediction accuracy with respect to the prediction target samples and the non-prediction target samples and the reliability of the actual result data. The server 11 transmits, to the client 12 via the network 13, data (hereinafter, referred to as display control data) for causing a screen indicating the fee and the basis of the fee to be displayed.

The client 12 displays a screen indicating the fee and the basis of the fee on the basis of the display control data. Then, the model user performs a procedure of payment of a fee, an inquiry, or the like using, for example, the client 12.

<Configuration Example of Server 11>

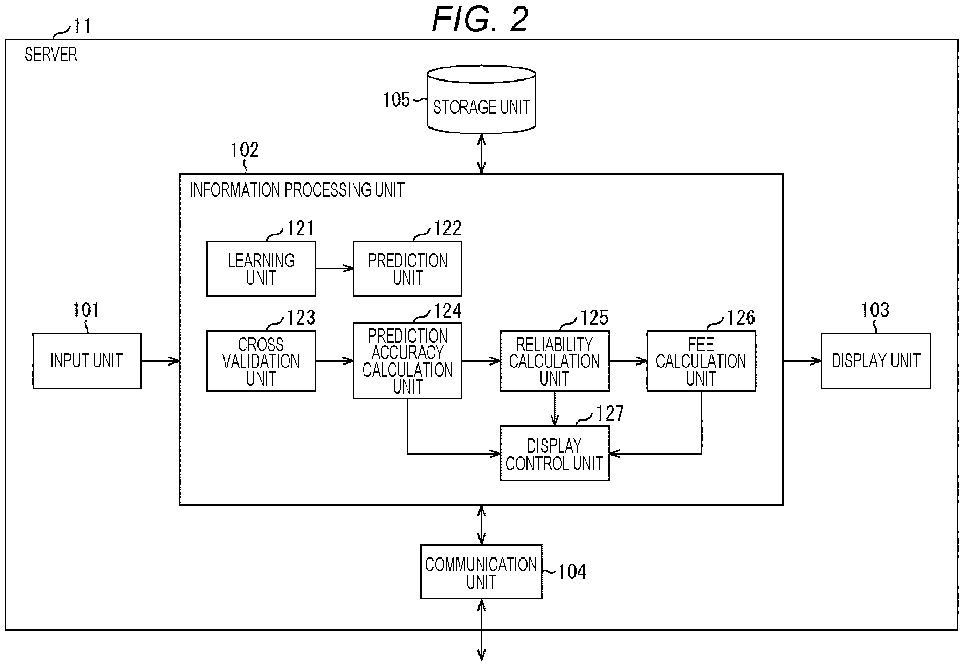

Fig. 2 is a block diagram illustrating a configuration example of the server 11.

The server 11 includes an input unit 101, an information processing unit 102, a display unit 103, a communication unit 104, and a storage unit 105.

The input unit 101 includes an input device such as a keyboard, a mouse, or a microphone, and supplies input data to the information processing unit 102.

The information processing unit 102 includes a learning unit 121, a prediction unit 122, a cross validation unit 123, a prediction accuracy calculation unit 124, a reliability calculation unit 125, a fee calculation unit 126, and a display control unit 127.

The learning unit 121 learns a prediction model on the basis of learning data acquired from the clients 12. The learning unit 121 supplies the generated prediction model to the prediction unit 122 and/or stores the generated prediction model in the storage unit 105.

The prediction unit 122 performs prediction related to a predetermined event of prediction target samples on the basis of the prediction model and the prediction target sample data acquired from the clients 12. The prediction unit 122 generates prediction result data indicating a prediction result, transmits the prediction result data to the clients 12 via the communication unit 104, and stores the prediction result data in the storage unit 105.

The cross validation unit 123 performs cross validation using the prediction target sample data, the prediction target actual result data, the non-prediction target sample data, and the non-prediction target actual result data acquired from the clients 12. Thus, a cross validation model that is a prediction model for predicting the same event as prediction models to be subjected to cross validation is generated. The cross validation unit 123 supplies the generated cross validation model to the prediction accuracy calculation unit 124.

The prediction accuracy calculation unit 124 calculates the prediction accuracy with respect to each sample using the prediction target sample data, the prediction target actual result data, the non-prediction target sample data, and the non-prediction target actual result data acquired from the clients 12, and the cross validation model acquired from the cross validation unit 123. For example, the prediction accuracy calculation unit 124 calculates a prediction probability (hereinafter, referred to as a CV prediction probability) with respect to each sample using the cross validation model. Furthermore, the prediction accuracy calculation unit 124 calculates the prediction accuracy with respect to the prediction target sample on the basis of the CV prediction probability with respect to the prediction target sample and the prediction target actual result data. Moreover, the prediction accuracy calculation unit 124 calculates the prediction accuracy with respect to the non-prediction target sample on the basis of the CV prediction probability with respect to the non-prediction target sample and the non-prediction target actual result data. The prediction accuracy calculation unit 124 supplies data indicating the calculation result of the prediction accuracies to the reliability calculation unit 125 and the display control unit 127.

The reliability calculation unit 125 calculates the reliability of the actual result data acquired from the client 12 by comparing the prediction accuracy with respect to the prediction target samples with the prediction accuracy with respect to the non-prediction target samples. Furthermore, the prediction accuracy calculation unit 124 determines whether or not the actual result data is fraudulent on the basis of the reliability. The reliability calculation unit 125 supplies data indicating the calculation result of the prediction accuracy, the calculation result of the reliability, and the determination result on whether or not the actual result data is fraudulent to the fee calculation unit 126 and the display control unit 127.

The fee calculation unit 126 calculates the fee charged to the model user on the basis of the prediction accuracy with respect to the prediction target samples, the prediction accuracy with respect to the non-prediction target samples, the reliability of the actual result data, the determination result on whether or not the actual result data is fraudulent, and the like. The fee calculation unit 126 supplies data indicating the calculation result of the fee to the display control unit 127.

The display control unit 127 controls display processing of the display unit 103. For example, the display control unit 127 controls the display, by the display unit 103, of a screen indicating the fee charged to the model user and the basis of the fee.

Furthermore, the display control unit 127 controls display processing of the clients 12. For example, the display control unit 127 generates display control data for causing a screen indicating the fee charged to the model user and the basis of the fee to be displayed, and transmits the display control data to the client 12 via the communication unit 104. Thus, the display control unit 127 causes the client 12 to display a screen indicating the fee charged to the model user and the basis of the fee.

The display unit 103 includes a display device such as a display, and displays, for example, various types of information, an operation screen, and the like.

The communication unit 104 includes various communication devices and communicates with each client 12 via the network 13. Note that the communication method of the communication unit 104 is not particularly limited, and the communication unit 104 may support a plurality of communication methods.

The storage unit 105 includes, for example, nonvolatile and volatile memories, and stores various programs and various types of data used for processing performed by the server 11.

<Configuration Example of Client 12>

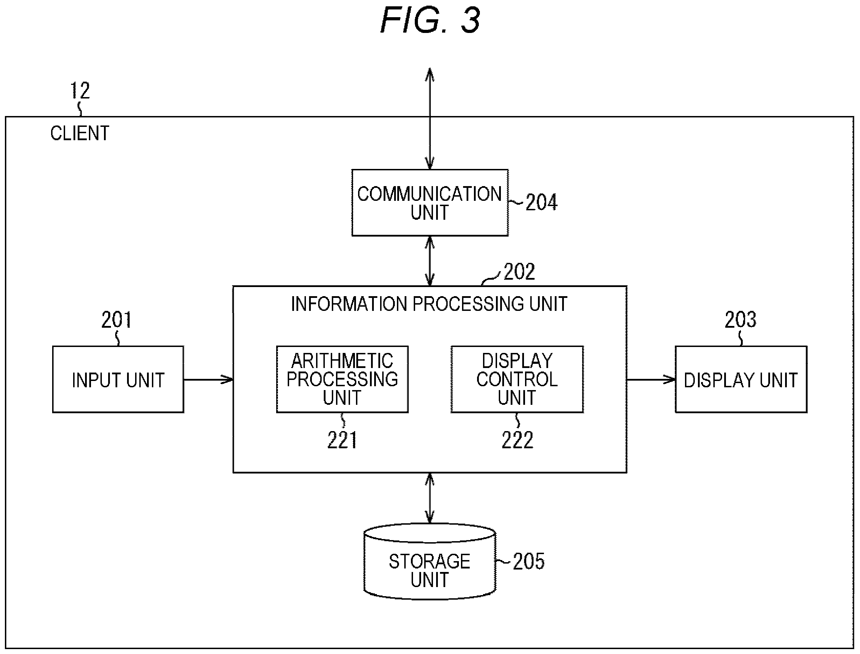

Fig. 3 is a block diagram illustrating a configuration example of the client 12.

The client 12 includes an input unit 201, an information processing unit 202, a display unit 203, a communication unit 204, and a storage unit 205.

The input unit 201 includes an input device such as a keyboard, a mouse, or a microphone, and supplies input data to the information processing unit 202.

The information processing unit 202 includes an arithmetic processing unit 221 and a display control unit 222.

The arithmetic processing unit 221 performs various arithmetic operations and controls each unit of the client 12. For example, the arithmetic processing unit 221 generates learning data, prediction target sample data, non-prediction target sample data, prediction target actual result data, non-prediction target actual result data, and the like on the basis of log data and the like stored in the storage unit 205, and transmits the data to the server 11 via the communication unit 204.

The display control unit 222 controls display processing of the display unit 203. For example, the display control unit 222 controls the display, by the display unit 203, of a screen indicating the fee charged to the model user and the basis of the fee.

The display unit 203 includes a display device such as a display, and displays, for example, various types of information, an operation screen, and the like.

The communication unit 204 includes various communication devices and communicates with the server 11 via the network 13. Note that the communication method of the communication unit 204 is not particularly limited, and the communication unit 204 may support a plurality of communication methods.

The storage unit 205 includes, for example, nonvolatile and volatile memories, and stores various programs and various types of data used for processing performed by the client 12. For example, the storage unit 205 stores log data indicating personal information, behavior history, and the like of users who use the service provided by the client 12.

<Prediction Service Providing Processing>

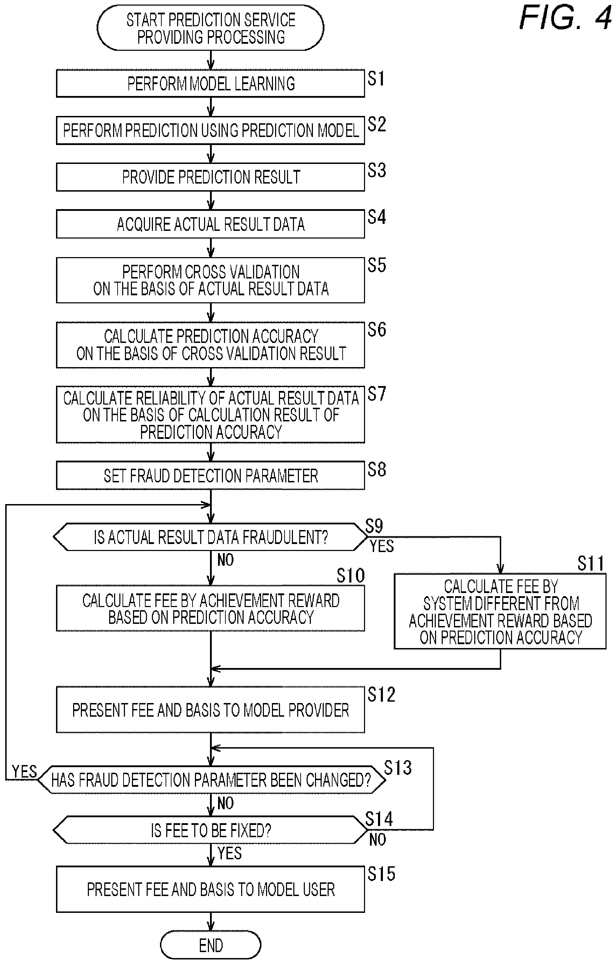

Next, prediction service providing processing processed by the server 11 will be described with reference to a flowchart of Fig. 4.

Note that hereinafter, a case where a model provider provides a service for predicting whether or not a user who uses the service provided by the model user will purchase a product within a predetermined period (for example, within one month) will be described as a specific example.

In step S1, the learning unit 121 performs model learning.

Specifically, for example, the model user inputs an instruction to transmit learning data via the input unit 201 of the client 12. The arithmetic processing unit 221 generates the learning data on the basis of the log data stored in the storage unit 205.

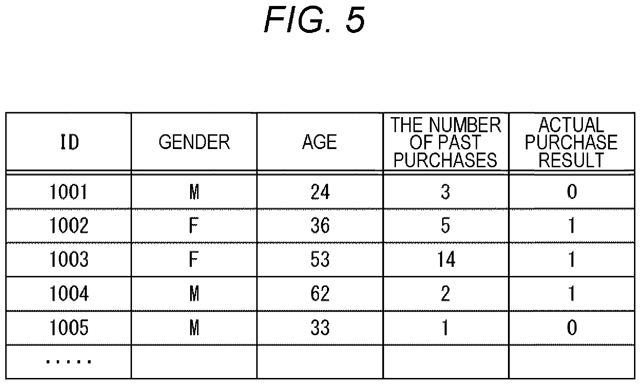

Fig. 5 illustrates an example of the learning data. The learning data includes data related to users as learning targets (hereinafter, referred to as learning target users). For example, the learning data includes "ID", feature amounts of the user, and "actual purchase result". The feature amounts of the user include, for example, "gender", "age", and "the number of past purchases".

The "ID" indicates an identification (ID) assigned to each user in order to uniquely identify the users who use the service provided by the model user. In this example, IDs of 1000 to 2000 are assigned to the learning target users.

The "gender" indicates the gender of the user.

The "age" indicates the age of the user.

The "number of past purchases" indicates the number of times the user has purchased the product within a predetermined purchase number count period. The purchase number count period is set to, for example, a period from a day that is a first period before (for example, one year and one month before) a predetermined reference date to a day before a day that is a second period before (for example, one month before) the predetermined reference date. The reference date is set to, for example, the current date.

The "actual purchase result" indicates whether or not the user has purchased the product within a predetermined actual purchase result target period. For example, the "actual purchase result" is set to 1 in a case where the user has purchased the product within the actual purchase result target period regardless of the number of times of purchase, and is set to 0 in a case where the user has not purchased the product within the actual purchase result target period. The actual purchase result target period is set to, for example, a period from a day that is the second period before the reference date to the reference date.

The arithmetic processing unit 221 transmits the generated learning data to the server 11 via the communication unit 204.

On the other hand, the information processing unit 102 of the server 11 receives the learning data via the network 13 and the communication unit 104 and stores the learning data in the storage unit 105.

For example, a web application programming interface (API) or the like is used to exchange the learning data between the server 11 and the client 12.

The learning unit 121 reads the learning data from the storage unit 105 and performs machine learning using the learning data. Thus, a prediction model for predicting, for example, a probability that the user will purchase a product within a predetermined period (for example, within one month) after the reference date is generated.

Note that the model used as the prediction model is not particularly limited, and for example, a general machine learning model such as a Deep Neural Network model or a logistic regression model is used.

The learning unit 121 stores the generated prediction model in the storage unit 105.

In step S2, the prediction unit 122 performs prediction using the prediction model.

Specifically, for example, the model user inputs an instruction to generate and transmit the prediction target sample data via the input unit 201 of the client 12. The arithmetic processing unit 221 generates the prediction target sample data on the basis of the log data stored in the storage unit 205.

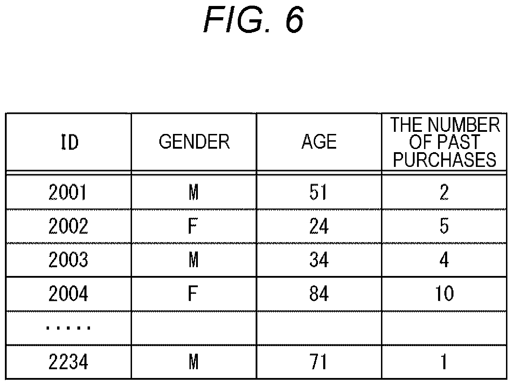

Fig. 6 illustrates an example of the prediction target sample data. The prediction target sample data is data related to users (hereinafter, referred to as prediction target users) who are samples to be predicted, and includes the items of the learning data in Fig. 5 except for the "actual purchase result". Note that in this example, IDs of 2000 to 3000 are assigned to the prediction target users.

The arithmetic processing unit 221 transmits the generated prediction target sample data to the server 11 via the communication unit 204.

On the other hand, the information processing unit 102 of the server 11 receives the prediction target sample data via the network 13 and the communication unit 104 and stores the prediction target sample data in the storage unit 105.

For example, a web API or the like is used to exchange the prediction target sample data between the server 11 and the client 12.

The prediction unit 122 reads the prediction model and the prediction target sample data from the storage unit 105, and inputs the prediction target sample data to the prediction model. The prediction model predicts probabilities that the prediction target users will purchase a product within a predetermined prediction target period, and outputs prediction result data indicating a prediction result. The prediction target period is set, for example, to a predetermined period (for example, within one month) from the next day.

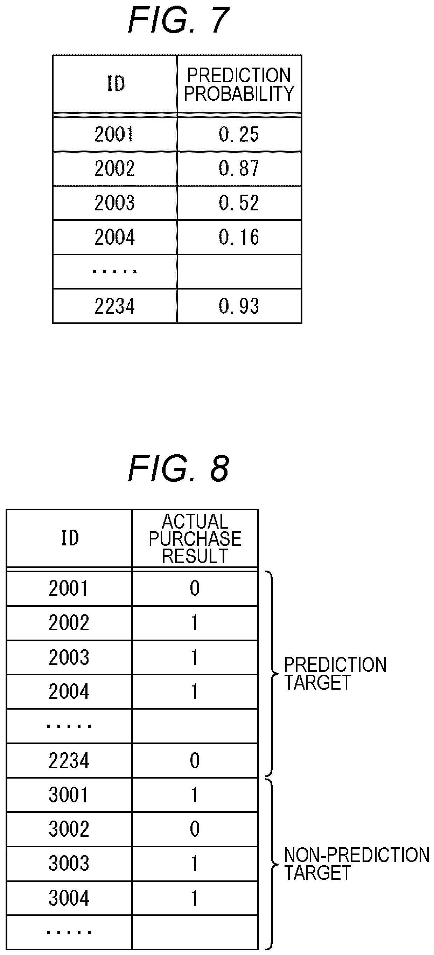

Fig. 7 illustrates an example of prediction result data. The prediction result data includes items of "ID" and "prediction probability".

The "prediction probability" indicates a prediction value of a probability that the user will purchase a product within the prediction target period.

In step S3, the prediction unit 122 provides a prediction result. Specifically, the prediction unit 122 transmits the prediction result data to the client 12 via the communication unit 104. Furthermore, the prediction unit 122 stores the prediction result data in the storage unit 105.

On the other hand, the information processing unit 202 of the client 12 receives the prediction result data via the network 13 and the communication unit 204, and stores the prediction result data in the storage unit 205.

Furthermore, for example, the model user performs a measure for promoting users to purchase the product on the basis of the prediction result data. For example, the model user performs a measure such as promoting a product preferentially to users having higher prediction probabilities. Then, the model user inputs an actual purchase result of each user to the client 12 via the input unit 201. The arithmetic processing unit 221 records the actual purchase result of each user in the log data stored in the storage unit 205.

In step S4, the server 11 acquires the actual result data.

Specifically, for example, the model user inputs an instruction to generate and transmit the actual result data via the input unit 201 of the client 12. The arithmetic processing unit 221 generates the actual result data on the basis of the log data stored in the storage unit 205.

Fig. 8 illustrates an example of the actual result data. The actual result data includes "ID" and "actual purchase result".

The "actual purchase result" indicates whether or not the user has actually purchased the product within the prediction target period. For example, the "actual purchase result" is set to 1 in a case where the user has purchased the product within the prediction target period regardless of the number of times of purchase, and is set to 0 in a case where the user has not purchased the product within the prediction target period.

Note that the actual result data includes not only the actual result data of the prediction target users (prediction target actual result data) but also the actual result data of the non-prediction target users (non-prediction target actual result data). The non-prediction target users include, for example, a user who is out of the prediction target, a user who has newly used the service provided by the model user, and the like.

Note that for example, the learning target users may be included in the non-prediction target users.

Note that in the example of Fig. 8, IDs of 2000 to 3000 are assigned to the prediction target users as described above, and IDs of 3000 to 4000 are assigned to non-prediction target users.

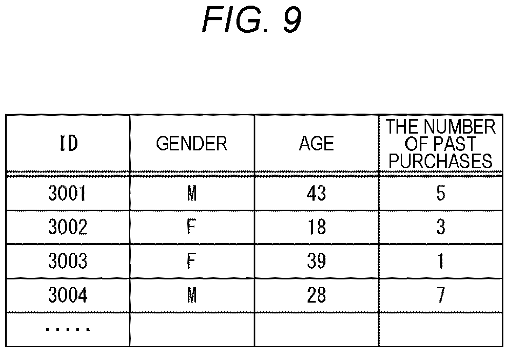

Furthermore, the arithmetic processing unit 221 generates non-prediction target sample data, which is data related to the non-prediction target users, on the basis of the log data stored in the storage unit 205. The non-prediction target sample data includes items similar to the prediction target sample data in Fig. 6, for example, as illustrated in Fig. 9.

The arithmetic processing unit 221 transmits the actual result data and the non-prediction target sample data to the server 11 via the communication unit 204.

On the other hand, the information processing unit 102 of the server 11 receives the actual result data and the non-prediction target sample data via the network 13 and the communication unit 104 and stores the actual result data and the non-prediction target sample data in the storage unit 105.

For example, a web API or the like is used for exchange of the actual result data and the non-prediction target sample data between the server 11 and the client 12.

In step S5, the cross validation unit 123 performs cross validation on the basis of the actual result data.

Specifically, the cross validation unit 123 reads the prediction target sample data, the non-prediction target sample data, and the actual result data from the storage unit 105. The cross validation unit 123 generates cross validation data to be used for cross validation on the basis of the prediction target sample data, the non-prediction target sample data, and the actual result data.

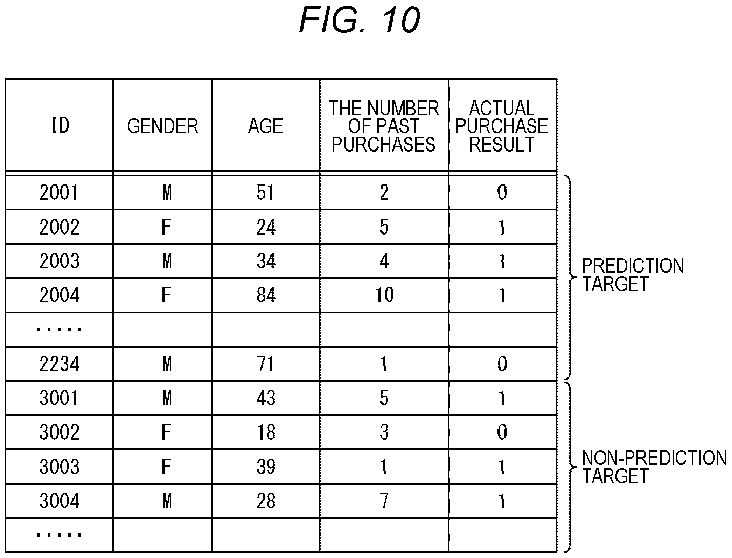

Fig. 10 illustrates an example of the cross validation data. The cross validation data includes "ID", "gender", "age", "number of past purchases", and "actual purchase result". That is, the cross validation data includes data (hereinafter, referred to as a prediction target sample data set) obtained by combining the prediction target sample data in Fig. 6 and data with respect to the prediction target users (prediction target actual result data) out of the actual result data in Fig. 8. Furthermore, the cross validation data includes data (hereinafter, referred to as a non-prediction target sample data set) obtained by combining the non-prediction target sample data in Fig. 9 and data with respect to the non-prediction target users (non-prediction target actual result data) out of the actual result data in Fig. 8.

The cross validation unit 123 generates a cross validation model that is a prediction model for predicting the same event (for example, a probability that the user will purchase a product within the prediction target period) as the prediction models by performing cross validation on the basis of the cross validation data.

Specifically, for example, the cross validation unit 123 divides data included in the cross validation data into two groups, a group of data pieces of users having odd IDs and a group of data pieces of users with even IDs.

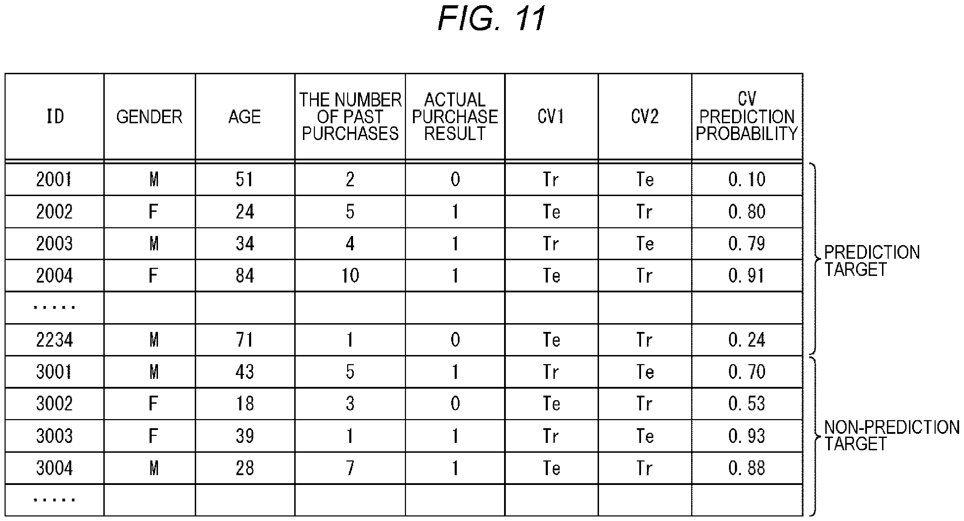

Next, as illustrated in Fig. 11, for example, the cross validation unit 123 performs the first cross validation using data of the group of users having odd IDs (hereinafter, referred to as an odd group) as training data and the group of users having even IDs (hereinafter, referred to as an even group) as validation data. Note that the column of CV1 in Fig. 11 indicates the type of data for the first cross validation, and "Tr" indicates training data while "Te" indicates validation data.

Next, the cross validation unit 123 performs the second cross validation using data of the even group as training data and data of the odd group as validation data. Note that the column of CV2 in Fig. 11 indicates the type of data for the second cross validation.

By performing the cross validation in this manner, a cross validation model is generated.

The cross validation unit 123 supplies the generated cross validation model to the prediction accuracy calculation unit 124.

Note that the number of divisions of the cross validation data may be set to three or more. In this case, the prediction target sample data set and the non-prediction target sample data set are distributed such that each of groups after the division includes both of data included in the prediction target sample data set and data included in the non-prediction target sample data set.

In step S6, the prediction accuracy calculation unit 124 calculates the prediction accuracy on the basis of the result of the cross validation.

Specifically, the prediction accuracy calculation unit 124 reads the prediction target sample data, the non-prediction target sample data, and the actual result data from the storage unit 105. Then, the prediction accuracy calculation unit 124 predicts probabilities (hereinafter, referred to as a CV prediction probabilities) that the prediction target users will purchase a product within the prediction target period by inputting the prediction target sample data to the cross validation model. Furthermore, the prediction accuracy calculation unit 124 predicts the probabilities (CV prediction probabilities) that the non-prediction target users will purchase a product within the prediction target period by inputting the non-prediction target sample data to the cross validation model.

Fig. 11 illustrates an example of the CV prediction probability of each user.

Next, the prediction accuracy calculation unit 124 calculates the prediction accuracy $\alpha_p$ with respect to the prediction target users on the basis of the CV prediction probabilities and the actual purchase results of the prediction target users. Furthermore, the prediction accuracy calculation unit 124 calculates the prediction accuracy $\alpha_q$ with respect to the non-prediction target users on the basis of the CV prediction probabilities and the actual purchase results of the non-prediction target users.

Note that a method of calculating the prediction accuracy $\alpha_p$ and the prediction accuracy $\alpha_q$ is not particularly limited. For example, an accuracy ratio (AR) value, a logistic loss, or the like is used. Note that in a case where, for example, a loss function is used, the reciprocal of the loss calculated by the loss function is used as the prediction accuracy.

The prediction accuracy calculation unit 124 supplies data indicating the prediction accuracy $\alpha_p$ and the prediction accuracy $\alpha_q$ to the reliability calculation unit 125 and the display control unit 127.

In step S7, the reliability calculation unit 125 calculates the reliability of the actual result data on the basis of the calculation result of the prediction accuracy. Specifically, the reliability calculation unit 125 calculates the actual result data, in particular, the reliability R of the actual result data of the prediction target users by comparing the prediction accuracy $\alpha_p$ with the prediction accuracy $\alpha_q$. For example, the reliability calculation unit 125 calculates the reliability R by the following Expression (1).

$$R = \alpha_p / \alpha_q \ ... \ (1)$$

Here, when a true value of the prediction accuracy with respect to the prediction target users of the prediction model is $\alpha_f$, in a case where the actual result data is not falsified, the prediction accuracy $\alpha_p$ is substantially equal to a prediction accuracy $\alpha_f$. Furthermore, since it is assumed that there is almost no difference between the prediction accuracy $\alpha_p$ and the prediction accuracy $\alpha_q$, the prediction accuracy $\alpha_q$ is also substantially equal to the prediction accuracy $\alpha_f$. Therefore, the reliability R is a value close to 1.

On the other hand, in a case where the model user attempts to lower the prediction accuracy of the prediction model with respect to the prediction target users in order to unreasonably lower the usage fee of the prediction service, it is assumed, for example, that the model user falsifies the actual result data of the prediction target users so that the actual result data and the prediction probabilities of the prediction target users deviate from each other. In other words, it is assumed that the model user falsifies the actual result data of the prediction target users so that the difference between the actual result data and the prediction probabilities of the prediction target users increases. In this case, the prediction accuracy $\alpha_p$ is considerably lower than the prediction accuracy $\alpha_f$.

Meanwhile, in a case where, for example, the actual result data of the non-prediction target users is used for relearning of the prediction model, falsification of the actual result data of the non-prediction target users by the model user decreases the accuracy of relearning of the prediction model. Therefore, in this case, there is no incentive for the model user to falsify the actual result data of the non-prediction target users. Therefore, it is assumed that the prediction accuracy $\alpha_q$ remains substantially the same as the prediction accuracy $\alpha_f$.

Therefore, in a case where the model user attempts to unreasonably lower the usage fee of the prediction service, it is assumed that the prediction accuracy $\alpha_p$ becomes small with respect to the prediction accuracy $\alpha_q$, and the reliability R decreases.

In step S8, the reliability calculation unit 125 sets a fraud detection parameter. When the fraud detection parameter is $\beta$, the fraud detection parameter $\beta$ is set within a range of $0 < \beta < 1$.

For example, the reliability calculation unit 125 sets the fraud detection parameter $\beta$ to a predetermined default value. Alternatively, for example, the reliability calculation unit 125 sets the fraud detection parameter $\beta$ to a final value of the previously performed prediction service providing processing according to the flowchart of Fig. 4.

In step S9, the reliability calculation unit 125 determines whether or not the actual result data is fraudulent. For example, the reliability calculation unit 125 determines whether or not the actual result data is fraudulent by using a variable threshold value based on the fraud detection parameter $\beta$ according to the following Expression (2) .

$$R < 1 - \beta \text{ (where } 0 < \beta < 1) \ \dots \ (2)$$

For example, the reliability calculation unit 125 determines that the actual result data is fraudulent in a case where Expression (2) is satisfied, and determines that the actual result data is not fraudulent in a case where Expression (2) is not satisfied. Then, in a case where it is determined that the actual result data is not fraudulent, the processing proceeds to step S10.

In step S10, the server 11 calculates a fee by an achievement reward based on the prediction accuracy.

Specifically, the reliability calculation unit 125 supplies data indicating the prediction accuracy $\alpha_p$, the prediction accuracy $\alpha_q$, and the determination result on whether the actual result data is fraudulent to the fee calculation unit 126 and the display control unit 127.

The fee calculation unit 126 calculates a fee C to be charged to the model user by the following Expression (3), for example.

$$C = C1 \times \alpha_p \ \dots \ (3)$$

C1 is a predetermined coefficient greater than 0. That is, the fee C is an amount of money proportional to the prediction accuracy $\alpha_p$.

The fee calculation unit 126 supplies data indicating the fee C to the display control unit 127.

Thereafter, the processing proceeds to step S12.

On the other hand, in a case where it is determined in step S9 that the actual result data is fraudulent, the processing proceeds to step S11.

In step S11, the server 11 calculates a fee by a system different from the achievement reward based on the prediction accuracy.

Specifically, the reliability calculation unit 125 supplies data indicating the prediction accuracy $\alpha_p$, the prediction accuracy $\alpha_q$, and the determination result on whether the actual result data is fraudulent to the fee calculation unit 126 and the display control unit 127.

For example, in a case where the prediction accuracy is 100%, the reliability calculation unit 125 sets the fee to a predetermined amount of money higher than the amount of money calculated by Expression (3) stated above.

Alternatively, for example, the reliability calculation unit 125 sets an amount of money corresponding to the use time and the data amount of the prediction service of the model user as the fee.

Alternatively, for example, the reliability calculation unit 125 calculates the fee C by the following Expression (4).

$$C = C1 \times \alpha_q + C2(\alpha_q - \alpha_p) \ \dots \ (4)$$

C2 is a predetermined coefficient greater than 0. The first term of Expression (4) expresses an amount of money proportional to the prediction accuracy $\alpha_q$ assumed to be close to the prediction accuracy $\alpha_f$. The second term of Expression (4) expresses a punitive amount of money that becomes higher as the prediction accuracy $\alpha_p$ deviates more from the prediction accuracy $\alpha_q$.

The fee calculation unit 126 supplies data indicating the fee C to the display control unit 127.

Thereafter, the processing proceeds to step S12.

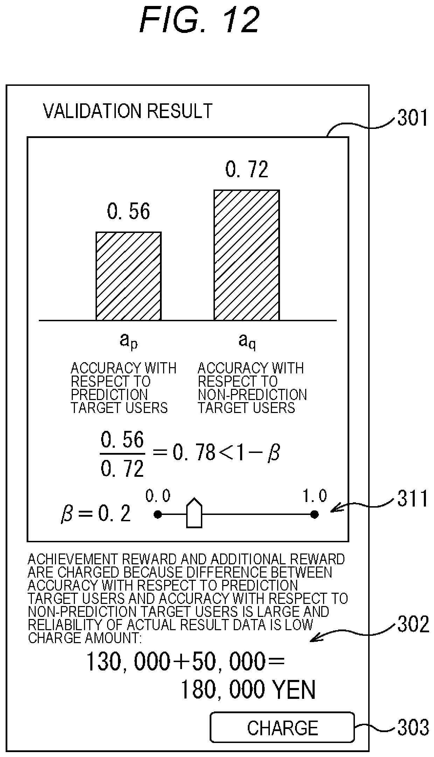

In step S12, the server 11 presents the fee and the basis to the model provider. For example, the display unit 103 displays a screen of Fig. 12 under the control of the display control unit 127.

On the screen of Fig. 12, a window 301, a display area 302, and a charge button 303 are displayed in this order from the top.

In the window 301, a bar graph for comparing the prediction accuracy $\alpha_p$ and the prediction accuracy $\alpha_q$ is displayed. Furthermore, below the bar graph, a mathematical expression expressing the reliability R of the actual result data and a determination result on whether the actual result data is fraudulent is displayed. Moreover, below the expression, the value of the fraud detection parameter $\beta$ and a slider 311 for setting the fraud detection parameter $\beta$ are displayed. The model provider can adjust the fraud detection parameter $\beta$ using the slider 311.

In the display area 302, the fee charged to the model user, and a sentence and a mathematical expression for explaining the basis of the fee are displayed. In this example, it is explained that an achievement reward and an additional reward are charged because a difference between the accuracy with respect to the prediction target users (prediction accuracy $\alpha_p$) and the accuracy with respect to the non-prediction target users (prediction accuracy $\alpha_q$) is large, and thus the reliability of actual result data (of the prediction target users) is low.

The charge button 303 is pressed when the model provider fixes the fee to be charged to the model user.

In step S13, the reliability calculation unit 125 determines whether or not the fraud detection parameter $\beta$ has been changed. In a case where the reliability calculation unit 125 determines that the fraud detection parameter $\beta$ has not been changed, the processing proceeds to step S14.

In step S14, the fee calculation unit 126 determines whether or not to fix the fee. In a case where the fee calculation unit 126 determines not to fix the fee, the processing returns to step S13.

Thereafter, the processing of steps S13 and S14 is repeatedly performed until it is determined in step S13 that the fraud detection parameter $\beta$ has been changed or it is determined in step S14 that the fee is fixed.

On the other hand, in a case, for example, where the model provider operates the slider 311 on the screen of Fig. 12 via the input unit 101 of the server 11, the reliability calculation unit 125 determines that the fraud detection parameter $\beta$ has been changed in step S13, and the processing returns to step S9.

Thereafter, the processing of steps S9 to S14 is repeatedly performed until it is determined in step S14 that the fee is fixed. That is, the processing of determining whether or not the actual result data is fraudulent on the basis of the fraud detection parameter $\beta$ changed using the slider 311, calculating the fee, and presenting the fee is repeatedly performed.

On the other hand, in a case, for example, where the model provider presses the charge button 303 on the screen of Fig. 12 via the input unit 101 of the server 11, the fee calculation unit 126 determines to fix the fee in step S14, and the processing proceeds to step S15.

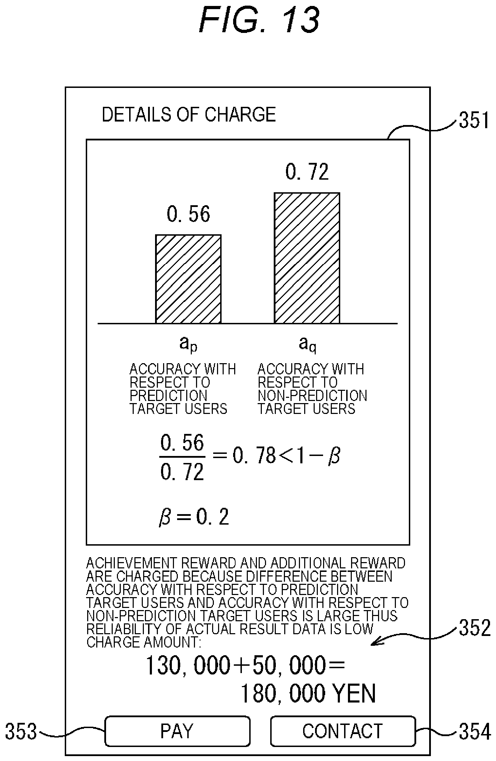

In step S15, the server 11 presents the fee and the basis to the model user. For example, the display control unit 127 generates display control data for causing the screen of Fig. 13 to be displayed on the client 12 of the model user (the client 12 as the transmission source of the actual result data). The display control unit 127 transmits the display control data to the client 12 via the communication unit 104.

On the other hand, the display control unit 222 of the client 12 receives the display control data via the network 13 and the communication unit 204. The display control unit 222 controls the display unit 203 on the basis of the display control data so that the display unit 203 displays the screen of Fig. 13.

On the screen of Fig. 13, a window 351, a display area 352, a pay button 353, and a contact button 354 are displayed.

In the window 351, information in the window 301 of Fig. 12 except for the slider 311 is displayed.

In the display area 352, information similar to that in the display area 302 of Fig. 12 is displayed.

The pay button 353 is pressed when the model user pays the presented fee.

The contact button 354 is pressed when the model user contacts the model provider to make an inquiry or the like about the presented fee.

Thereafter, the service providing processing ends.

As described above, it is possible to easily and appropriately calculate the reliability with respect to the actual result data provided from the model user, particularly, the actual result data of the prediction target users. Furthermore, it is possible to reliably detect fraud of the actual result data provided from the model user, particularly, the actual result data of the prediction target users on the basis of the reliability.

Furthermore, since the fraud of the actual result data is reliably detected, a fee that is fair and appropriate to the model provider and the model user can be charged. For example, in a case where it is determined that the actual result data is not fraudulent, a fee is charged by an achievement reward corresponding to the prediction accuracy of the prediction model. On the other hand, in a case where it is determined that the actual result data is fraudulent, a fee calculated by a system different from the achievement reward according to the prediction accuracy of the prediction model is calculated. As a result, the profit of the model provider is reliably secured.

## <<2. Modifications>>

Hereinafter, modifications of the above-described embodiments of the present technology will be described.

For example, the cross validation unit 123 may perform cross validation using the learning data in Fig. 5 in addition to the cross validation data in Fig. 10.

Furthermore, for example, the prediction accuracy calculation unit 124 may calculate the prediction accuracy with respect to the prediction target users and the prediction accuracy with respect to the non-prediction target users using a prediction model instead of the cross validation model.

For example, the prediction accuracy calculation unit 124 calculates the prediction probability with respect to the non-prediction target users by inputting the non-prediction target sample data to the prediction model. Then, the prediction accuracy calculation unit 124 calculates the prediction accuracy $\alpha_p$ with respect to the prediction target users on the basis of the prediction probability with respect to the prediction target users calculated by the prediction unit 122 and the actual result data with respect to the prediction target users. Furthermore, the prediction accuracy calculation unit 124 calculates the prediction accuracy $\alpha_q$ with respect to the non-prediction target users on the basis of the prediction probability with respect to the non-prediction target users and the actual result data with respect to the non-prediction target users.

Then, the reliability calculation unit 125 calculates the reliability R on the basis of the prediction accuracy $\alpha_p$ and the prediction accuracy $\alpha_q$ using, for example, Expression (1) stated above.

Moreover, for example, the reliability calculation unit 125 may calculate the reliability of the actual result data by a method different from Expression (1). For example, the reliability calculation unit 125 may calculate the reliability on the basis of a difference between the prediction accuracy $\alpha_p$ and the prediction accuracy $\alpha_q$.

Furthermore, for example, the prediction accuracy calculation unit 124 may calculate the actual prediction accuracy on the basis of the prediction probability with respect to the prediction target users predicted by the prediction unit 122 and the actual purchase results of the prediction target users, and the fee calculation unit 126 may calculate the fee C using the actual prediction accuracy instead of the prediction accuracy $\alpha_p$ in Expression (3).

Moreover, for example, the reliability calculation unit 125 may set the initial value of the fraud detection parameter $\beta$ on the basis of past actual result of each model user. For example, the reliability calculation unit 125 may set a value obtained by multiplying the standard deviation $\sigma$ of prediction accuracies calculated for a certain model user by a constant as the fraud detection parameter $\beta$ in consideration of the variation of the prediction accuracies. For example, assuming a normal distribution, the constant is set such that the occurrence probability of fraud is 1% or less in the statistical data.

Furthermore, the screens of Figs. 12 and 13 are examples, and can be changed to any other screens. For example, only one of the prediction accuracy $\alpha_p$, the prediction accuracy $\alpha_q$, or the reliability R may be displayed. Furthermore, for example, the content of information and the amount of information may be greatly changed between the screen for the model provider and the screen for the model user.

Moreover, although the example in which the samples to be predicted are users (persons) who use the service has been described above, the present technology can also be applied to a case where an event related to samples other than persons is predicted.

Furthermore, for example, some of the functions of the server 11 may be executed by the client 12.

## <<3. Others>>

## <Configuration Example of Computer>

The above-described series of processing can be performed by hardware or software. In a case where the series of processing is performed by software, a program for implementing the software is installed in a computer. Here, the computer includes a computer incorporated in dedicated hardware, a computer capable of executing various functions by installing various programs such as a generalpurpose personal computer, and the like, for example.

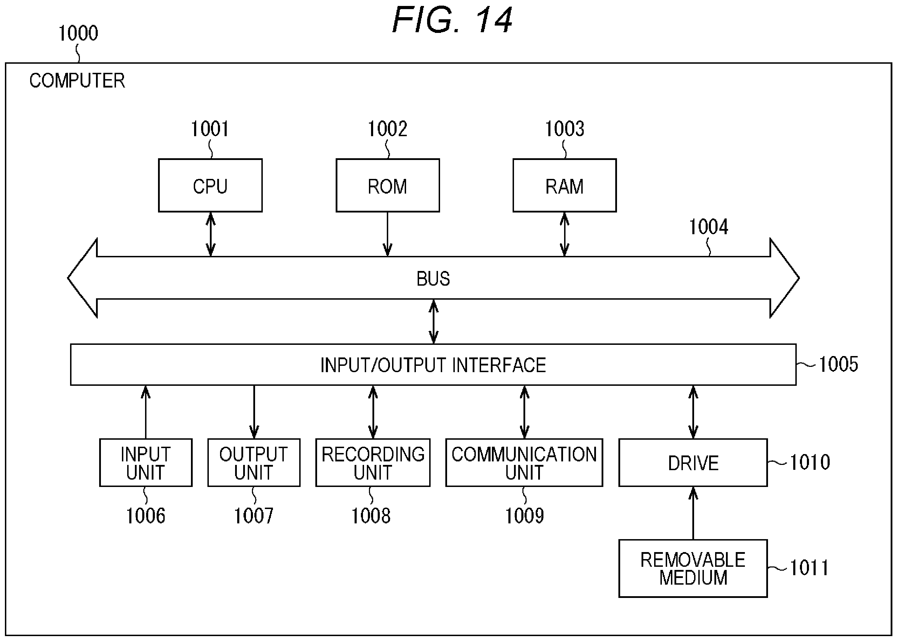

Fig. 14 is a block diagram illustrating a configuration example of hardware of a computer that performs the above-described series of processing using a program.

In the computer 1000, a central processing unit (CPU) 1001, a read only memory (ROM) 1002, and a random access memory (RAM) 1003 are connected to each other by a bus 1004.

An input/output interface 1005 is further connected to the bus 1004. To the input/output interface 1005, an input unit 1006, an output unit 1007, a recording unit 1008, a communication unit 1009, and a drive 1010 are connected.

The input unit 1006 includes an input switch, a button, a microphone, an image sensor, or the like. The output unit 1007 includes a display, a speaker, or the like. The recording unit 1008 includes a hard disk, a nonvolatile memory, or the like. The communication unit 1009 includes a network interface or the like. The drive 1010 drives a removable medium 1011 such as a magnetic disk, an optical disk, a magneto-optical disk, or a semiconductor memory.

In the computer 1000 configured as described above, for example, the CPU 1001 loads a program recorded in the recording unit 1008 into the RAM 1003 via the input/output interface 1005 and the bus 1004 and executes the program, so that the above-described series of processing is performed.

The program executed by the computer 1000 (CPU 1001) can be provided in a state recorded in the removable medium 1011 as a package medium or the like, for example. Furthermore, the program can be provided via a wired or wireless transmission medium such as a local area network, the Internet, or digital satellite broadcasting.

In the computer 1000, the program can be installed in the recording unit 1008 via the input/output interface 1005 by attaching the removable medium 1011 to the drive 1010. Furthermore, the program can be received by the communication unit 1009 via a wired or wireless transmission medium and installed in the recording unit 1008. In addition, the program can be installed in the ROM 1002 or the recording unit 1008 in advance.

Note that the program executed by the computer may be a program that causes pieces of processing to be performed in time series in the order described in the present specification, or may be a program that causes the pieces of processing to be performed in parallel or at necessary timing such as when a call is made.

Furthermore, in the present specification, a system means a set of a plurality of components (devices, modules (parts), and the like), and it does not matter whether or not all the components are in the same housing. Therefore, a plurality of devices housed in separate housings and connected via a network, and one device having one housing in which a plurality of modules is housed are both systems.

Moreover, embodiments of the present technology are not limited to the above-described embodiment, and various modifications can be made without departing from the gist of the present technology.

For example, the present technology can have a configuration of cloud computing in which one function is shared and processed in cooperation by a plurality of devices via a network.

Furthermore, steps described in the above-described flowcharts can be performed by one device or can be shared and executed by a plurality of devices.

Moreover, in a case where a plurality of pieces of processing is included in one step, the plurality of pieces of processing included in the one step can be executed by one device or can be shared and executed by a plurality of devices.

<Combination Examples of Configurations>

Note that the present technology may also have the following configurations.
(1) An information processing device including:

a prediction accuracy calculation unit configured to calculate a first prediction accuracy with respect to a prediction target sample that is a prediction target of a prediction model, on the basis of first actual result data indicating an actual result value with respect to the prediction target sample, and calculate a second prediction accuracy with respect to a non-prediction target sample that is not a prediction target of the prediction model, on the basis of second actual result data indicating an actual result value with respect to the non-prediction target sample; and
a reliability calculation unit configured to calculate a reliability of the first actual result data on the basis of the first prediction accuracy and the second prediction accuracy.

(2) The information processing device according to above-described (1),
in which the prediction accuracy calculation unit calculates the first prediction accuracy on the basis of a first data set including prediction target sample data related to the prediction target sample and the first actual result data, and calculates the second prediction accuracy on the basis of a second data set including non-prediction target sample data related to the non-prediction target sample and the second actual result data.

(3) The information processing device according to above-described (2) further including

a cross validation unit configured to perform cross validation using the first data set and the second data set,
in which the prediction accuracy calculation unit calculates the first prediction accuracy and the second prediction accuracy on the basis of a result of the cross validation.

(4) The information processing device according to above-described (3),
in which the cross validation unit divides the first data set and the second data set into training data and validation data used for the cross validation so that the training data and the validation data each includes data included in the first data set and data included in the second data set in a distributed manner.

(5) The information processing device according to above-described (3) or (4),

> in which the cross validation unit generates a cross validation model that performs prediction of a same event as that of the prediction model, and
> the prediction accuracy calculation unit calculates the first prediction accuracy on the basis of the first data set and calculates the second prediction accuracy on the basis of the second data set, using the cross validation model.

(6) The information processing device according to above-described (2),
in which the prediction accuracy calculation unit calculates the first prediction accuracy on the basis of the first data set and calculates the second prediction accuracy on the basis of the second data set, using the prediction model.
(7) The information processing device according to any one of above-described (2) to (6) further including
a prediction unit configured to predict a predetermined event on the basis of the prediction model and the prediction target sample data.
(8) The information processing device according to any one of above-described (1) to (7),
in which the reliability calculation unit calculates the reliability by comparing the first prediction accuracy and the second prediction accuracy.
(9) The information processing device according to above-described (8), in which the reliability calculation unit determines whether or not the first actual result data is fraudulent on the basis of the reliability.
(10) The information processing device according to above-described (9),
in which the reliability calculation unit determines whether or not the first actual result data is fraudulent by comparing the reliability with a variable threshold value.
(11) The information processing device according to any one of above-described (1) to (10) further including
a fee calculation unit configured to calculate a fee on the basis of the first prediction accuracy.
(12) The information processing device according to above-described (11),

> in which the reliability calculation unit determines whether or not the first result data is fraudulent on the basis of the reliability, and
> the fee calculation unit calculates an achievement reward, as the fee, based on the first prediction accuracy in a case where the reliability calculation unit determines that the first actual result data is not fraudulent, and calculates the fee by a system different from the achievement reward based on the first prediction accuracy in a case where the reliability calculation unit determines that the first actual result data is fraudulent.

(13) The information processing device according to above-described (11) or (12) further including
a display control unit configured to control display of the fee and the basis of the fee.
(14) The information processing device according to above-described (13),
in which the display control unit performs control to display at least one of the first prediction accuracy, the second prediction accuracy, or the reliability as the basis of the fee.
(15) The information processing device according to above-described (13) or (14), in which the display control unit controls display of the fee and the basis of the fee in another information processing device that is a transmission source of the first actual result data and the second actual result data.
(16) The information processing device according to any one of above-described (1) to (15),
in which the non-prediction target sample includes a learning target sample as a learning target of the prediction model.
(17) The information processing device according to above-described (16) further including
a learning unit configured to perform learning of the prediction model on the basis of learning data related to the learning target sample.
(18) An information processing method performed by an information processing device, the method including:

> calculating a first prediction accuracy with respect to a prediction target sample that is a prediction target of a prediction model, on the basis of first actual result data indicating an actual result value with respect to the prediction target sample;
> calculating a second prediction accuracy with respect to a non-prediction target sample that is not a prediction target of the prediction model, on the basis of second actual result data indicating an actual result value with respect to the non-prediction target sample; and
> calculating a reliability of the first actual result data on the basis of the first prediction accuracy and the second prediction accuracy.

(19) A program for causing a computer to perform processing of calculating a first prediction accuracy with respect to a prediction target sample that is a prediction target of a prediction model, on the basis of first actual result data indicating an actual result value with respect to the prediction target sample;

calculating a second prediction accuracy with respect to a non-prediction target sample that is not a prediction target of the prediction model, on the basis of second actual result data indicating an actual result value with respect to the non-prediction target sample; and
calculating a reliability of the first actual result data on the basis of the first prediction accuracy and the second prediction accuracy.

Note that the effects described in the present specification are merely examples and are not limited, and other effects may be provided.

REFERENCE SIGNS LIST

| | |
|---|---|
| 1 | Information processing system |
| 11 | Server |
| 12-1 to 12-n | Client |
| 102 | Information processing unit |
| 103 | Display unit |
| 121 | Learning unit |
| 122 | Prediction unit |
| 123 | Cross validation unit |
| 124 | Prediction accuracy calculation unit |
| 125 | Reliability calculation unit |
| 126 | Fee calculation unit |
| 127 | Display control unit |
| 202 | Information processing unit |
| 203 | Display unit |
| 221 | Arithmetic processing unit |
| 222 | Display control unit |

**Claims**

1. An information processing device comprising:

   a prediction accuracy calculation unit configured to calculate a first prediction accuracy with respect to a prediction target sample that is a prediction target of a prediction model, on a basis of first actual result data indicating an actual result value with respect to the prediction target sample, and calculate a second prediction accuracy with respect to a non-prediction target sample that is not a prediction target of the prediction model, on a basis of second actual result data indicating an actual result value with respect to the non-prediction target sample; and
   a reliability calculation unit configured to calculate a reliability of the first actual result data on a basis of the first prediction accuracy and the second prediction accuracy.

2. The information processing device according to claim 1,
   wherein the prediction accuracy calculation unit calculates the first prediction accuracy on a basis of a first data set including prediction target sample data related to the prediction target sample and the first actual result data, and calculates the second prediction accuracy on a basis of a second data set including non-prediction target sample data related to the non-prediction target sample and the second actual result data.

3. The information processing device according to claim 2 further comprising

   a cross validation unit configured to perform cross validation using the first data set and the second data set,
   wherein the prediction accuracy calculation unit calculates the first prediction accuracy and the second prediction accuracy on a basis of a result of the cross validation.

**4.** The information processing device according to claim 3,
wherein the cross validation unit divides the first data set and the second data set into training data and validation data used for the cross validation so that the training data and the validation data each includes data included in the first data set and data included in the second data set in a distributed manner.

**5.** The information processing device according to claim 3,

wherein the cross validation unit generates a cross validation model that performs prediction of a same event as that of the prediction model, and
the prediction accuracy calculation unit calculates the first prediction accuracy on a basis of the first data set and calculates the second prediction accuracy on a basis of the second data set, using the cross validation model.

**6.** The information processing device according to claim 2,
wherein the prediction accuracy calculation unit calculates the first prediction accuracy on a basis of the first data set and calculates the second prediction accuracy on a basis of the second data set, using the prediction model.

**7.** The information processing device according to claim 2 further comprising
a prediction unit configured to predict a predetermined event on a basis of the prediction model and the prediction target sample data.

**8.** The information processing device according to claim 1,
wherein the reliability calculation unit calculates the reliability by comparing the first prediction accuracy and the second prediction accuracy.

**9.** The information processing device according to claim 8,
wherein the reliability calculation unit determines whether or not the first actual result data is fraudulent on a basis of the reliability.

**10.** The information processing device according to claim 9,
wherein the reliability calculation unit determines whether or not the first actual result data is fraudulent by comparing the reliability with a variable threshold value.

**11.** The information processing device according to claim 1 further comprising
a fee calculation unit configured to calculate a fee on a basis of the first prediction accuracy.

**12.** The information processing device according to claim 11,

wherein the reliability calculation unit determines whether or not the first result data is fraudulent on a basis of the reliability, and
the fee calculation unit calculates an achievement reward, as the fee, based on the first prediction accuracy in a case where the reliability calculation unit determines that the first actual result data is not fraudulent, and calculates the fee by a system different from the achievement reward based on the first prediction accuracy in a case where the reliability calculation unit determines that the first actual result data is fraudulent.

**13.** The information processing device according to claim 11 further comprising
a display control unit configured to control display of the fee and a basis of the fee.

**14.** The information processing device according to claim 13,
wherein the display control unit performs control to display at least one of the first prediction accuracy, the second prediction accuracy, or the reliability as the basis of the fee.

**15.** The information processing device according to claim 13, wherein the display control unit controls display of the fee and the basis of the fee in another information processing device that is a transmission source of the first actual result data and the second actual result data.

**16.** The information processing device according to claim 1,
wherein the non-prediction target sample includes a learning target sample as a learning target of the prediction model.

**17.** The information processing device according to claim 16 further comprising
a learning unit configured to perform learning of the prediction model on a basis of learning data related to the learning target sample.

**18.** An information processing method performed by an information processing device, the method comprising:

calculating a first prediction accuracy with respect to a prediction target sample that is a prediction target of a prediction model, on a basis of first actual result data indicating an actual result value with respect to the prediction target sample;
calculating a second prediction accuracy with respect to a non-prediction target sample that is not a prediction target of the prediction model, on a basis of second actual result data indicating an actual result value with respect to the non-prediction target sample; and
calculating a reliability of the first actual result data on a basis of the first prediction accuracy and the second prediction accuracy.

**19.** A program for causing a computer to perform processing of

calculating a first prediction accuracy with respect to a prediction target sample that is a prediction target of a prediction model, on a basis of first actual result data indicating an actual result value with respect to the prediction target sample;
calculating a second prediction accuracy with respect to a non-prediction target sample that is not a prediction target of the prediction model, on a basis of second actual result data indicating an actual result value with respect to the non-prediction target sample; and
calculating a reliability of the first actual result data on a basis of the first prediction accuracy and the second prediction accuracy.

# FIG. 1

11

SERVER

1

13

12-1

CLIENT

. . .

12-n

CLIENT

*FIG. 2*

EP 4 080 427 A1

*FIG. 3*

EP 4 080 427 A1

*FIG. 4*

START PREDICTION SERVICE
PROVIDING PROCESSING

↓

PERFORM MODEL LEARNING — S1

↓

PERFORM PREDICTION USING PREDICTION MODEL — S2

↓

PROVIDE PREDICTION RESULT — S3

↓

ACQUIRE ACTUAL RESULT DATA — S4

↓

PERFORM CROSS VALIDATION
ON THE BASIS OF ACTUAL RESULT DATA — S5

↓

CALCULATE PREDICTION ACCURACY
ON THE BASIS OF CROSS VALIDATION RESULT — S6

↓

CALCULATE RELIABILITY OF ACTUAL RESULT DATA
ON THE BASIS OF CALCULATION RESULT OF
PREDICTION ACCURACY — S7

↓

SET FRAUD DETECTION PARAMETER — S8

↓

IS ACTUAL RESULT DATA FRAUDULENT? — S9
— YES → CALCULATE FEE BY
SYSTEM DIFFERENT FROM
ACHIEVEMENT REWARD BASED
ON PREDICTION ACCURACY — S11

NO ↓

CALCULATE FEE BY ACHIEVEMENT REWARD
BASED ON PREDICTION ACCURACY — S10

↓

PRESENT FEE AND BASIS TO MODEL PROVIDER — S12

↓

HAS FRAUD DETECTION PARAMETER BEEN CHANGED? — S13
YES →

NO ↓

IS FEE TO BE FIXED? — S14
NO →

YES ↓

PRESENT FEE AND BASIS TO MODEL USER — S15

↓

END

20

## FIG. 5

| ID | GENDER | AGE | THE NUMBER OF PAST PURCHASES | ACTUAL PURCHASE RESULT |
|---|---|---|---|---|
| 1001 | M | 24 | 3 | 0 |
| 1002 | F | 36 | 5 | 1 |
| 1003 | F | 53 | 14 | 1 |
| 1004 | M | 62 | 2 | 1 |
| 1005 | M | 33 | 1 | 0 |
| . . . . . | | | | |

EP 4 080 427 A1

# FIG. 6

| ID | GENDER | AGE | THE NUMBER OF PAST PURCHASES |
|---|---|---|---|
| 2001 | M | 51 | 2 |
| 2002 | F | 24 | 5 |
| 2003 | M | 34 | 4 |
| 2004 | F | 84 | 10 |
| . . . . . | | | |
| 2234 | M | 71 | 1 |

EP 4 080 427 A1

# FIG. 7

| ID | PREDICTION PROBABILITY |
|---|---|
| 2001 | 0. 25 |
| 2002 | 0. 87 |
| 2003 | 0. 52 |
| 2004 | 0. 16 |
| . . . . . | |
| 2234 | 0. 93 |

# FIG. 8

| ID | ACTUAL PURCHASE RESULT | |
|---|---|---|
| 2001 | 0 | PREDICTION TARGET |
| 2002 | 1 | |
| 2003 | 1 | |
| 2004 | 1 | |
| . . . . . | | |
| 2234 | 0 | |
| 3001 | 1 | NON-PREDICTION TARGET |
| 3002 | 0 | |
| 3003 | 1 | |
| 3004 | 1 | |
| . . . . . | | |

# FIG. 9

| ID | GENDER | AGE | THE NUMBER OF PAST PURCHASES |
|---|---|---|---|
| 3001 | M | 43 | 5 |
| 3002 | F | 18 | 3 |
| 3003 | F | 39 | 1 |
| 3004 | M | 28 | 7 |
| . . . . . | | | |

# FIG. 10

| ID | GENDER | AGE | THE NUMBER OF PAST PURCHASES | ACTUAL PURCHASE RESULT | |
|---|---|---|---|---|---|
| 2001 | M | 51 | 2 | 0 | PREDICTION TARGET |
| 2002 | F | 24 | 5 | 1 | |
| 2003 | M | 34 | 4 | 1 | |
| 2004 | F | 84 | 10 | 1 | |
| . . . . . | | | | | |
| 2234 | M | 71 | 1 | 0 | |
| 3001 | M | 43 | 5 | 1 | NON-PREDICTION TARGET |
| 3002 | F | 18 | 3 | 0 | |
| 3003 | F | 39 | 1 | 1 | |
| 3004 | M | 28 | 7 | 1 | |
| . . . . . | | | | | |

EP 4 080 427 A1

## FIG. 11

| ID | GENDER | AGE | THE NUMBER OF PAST PURCHASES | ACTUAL PURCHASE RESULT | CV1 | CV2 | CV PREDICTION PROBABILITY | |
|----|--------|-----|------------------------------|------------------------|-----|-----|---------------------------|---|
| 2001 | M | 51 | 2 | 0 | Tr | Te | 0. 10 | PREDICTION TARGET |
| 2002 | F | 24 | 5 | 1 | Te | Tr | 0. 80 | |
| 2003 | M | 34 | 4 | 1 | Tr | Te | 0. 79 | |
| 2004 | F | 84 | 10 | 1 | Te | Tr | 0. 91 | |
| . . . . . | | | | | | | | |
| 2234 | M | 71 | 1 | 0 | Te | Tr | 0. 24 | |
| 3001 | M | 43 | 5 | 1 | Tr | Te | 0. 70 | NON-PREDICTION TARGET |
| 3002 | F | 18 | 3 | 0 | Te | Tr | 0. 53 | |
| 3003 | F | 39 | 1 | 1 | Tr | Te | 0. 93 | |
| 3004 | M | 28 | 7 | 1 | Te | Tr | 0. 88 | |
| . . . . . | | | | | | | | |

EP 4 080 427 A1

# FIG. 12

VALIDATION RESULT　　　　　　　　　　　301

0. 72

0. 56

$a_p$　　　　　　　$a_q$

ACCURACY WITH RESPECT TO PREDICTION TARGET USERS　　　ACCURACY WITH RESPECT TO NON-PREDICTION TARGET USERS

$$\frac{0.56}{0.72} = 0.78 < 1-\beta$$

$\beta = 0.2$　0.0　　　　　　　1.0　　　311

ACHIEVEMENT REWARD AND ADDITIONAL REWARD ARE CHARGED BECAUSE DIFFERENCE BETWEEN ACCURACY WITH RESPECT TO PREDICTION TARGET USERS AND ACCURACY WITH RESPECT TO NON-PREDICTION TARGET USERS IS LARGE AND RELIABILITY OF ACTUAL RESULT DATA IS LOW　　302
CHARGE AMOUNT:

130, 000＋50, 000＝
180, 000 YEN

CHARGE　　303

## FIG. 13

DETAILS OF CHARGE ~351

0. 72

0. 56

$a_p$

ACCURACY WITH RESPECT TO PREDICTION TARGET USERS

$a_q$

ACCURACY WITH RESPECT TO NON-PREDICTION TARGET USERS

$$\frac{0.56}{0.72} = 0.78 < 1 - \beta$$

$$\beta = 0.2$$

ACHIEVEMENT REWARD AND ADDITIONAL REWARD ARE CHARGED BECAUSE DIFFERENCE BETWEEN ACCURACY WITH RESPECT TO PREDICTION TARGET USERS AND ACCURACY WITH RESPECT TO NON-PREDICTION TARGET USERS IS LARGE THUS RELIABILITY OF ACTUAL RESULT DATA IS LOW ~352
CHARGE AMOUNT:

130, 000 + 50, 000 =
180, 000 YEN

353~ | PAY | | CONTACT | ~354

# FIG. 14

## INTERNATIONAL SEARCH REPORT

| International application No. |
|---|
| PCT/JP2020/044987 |

**A. CLASSIFICATION OF SUBJECT MATTER**
G06Q 10/04(2012.01)i
FI: G06Q10/04
According to International Patent Classification (IPC) or to both national classification and IPC

**B. FIELDS SEARCHED**

Minimum documentation searched (classification system followed by classification symbols)
G06Q10/04

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-087027 A (TOSHIBA CORP.) 06 June 2019 (2019-06-06) entire text, all drawings | 1–19 |
| A | JP 2008-123165 A (MIZEN KK) 29 May 2008 (2008-05-29) entire text, all drawings | 1–19 |
| A | JP 2004-139196 A (HITACHI, LTD.) 13 May 2004 (2004-05-13) entire text, all drawings | 1–19 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January 2021 (28.01.2021) | 09 February 2021 (09.02.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

International application no.

PCT/JP2020/044987

| Patent Documents referred in the Report | Publication Date | Patent Family | Publication Date |
|---|---|---|---|
| JP 2019-087027 A | 06 Jun. 2019 | US 2019/0139059 A1 | |
| JP 2008-123165 A | 29 May 2008 | (Family: none) | |
| JP 2004-139196 A | 13 May 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019046456 A